# FASCICULE DE BREVET EUROPEEN

(11) **EP 3 073 080 B1**
(45) Date de publication et mention de la délivrance du brevet: **23.08.2017**
(21) Numéro de dépôt: 16156679.9
(22) Date de dépôt: 22.02.2016
(51) Int. Cl.: F01N 3/20, F01N 9/00, F02D 41/14

(54) **PROCÉDÉ DE TRAITEMENT DES GAZ D'ÉCHAPPEMENT D'UN VÉHICULE AUTOMOBILE**
ABGASNACHBEHANDLUNGSVERFAHREN EINES KRAFTFAHRZEUGS
METHOD FOR TREATING EXHAUST GASES OF A MOTOR VEHICLE

(30) Priorité: 24.03.2015 FR 1552408
(43) Date de publication de la demande: 28.09.2016
(73) Titulaire: Peugeot Citroën Automobiles SA, 78140 Vélizy-Villacoublay (FR)
(72) Inventeur: BERNARD, Yoan, 78570 ANDRESY (FR); CLAVEL, Guillaume, 92000 NANTERRE (FR); ZUMI, Michel, 92600 Asnières-sur-Seine (FR)

(56) Documents cités:
- DE-A1-102006 000 074
- FR-A1- 2 903 728
- FR-A1- 2 961 558
- US-A1- 2014 260 190

## Description

L'invention a trait au domaine de la dépollution des gaz rejetés par les moteurs diesel.

Les gaz d'échappement des moteurs diesel contiennent des éléments dont il est préférable de limiter les rejets dans l'atmosphère, en particulier des oxydes d'azote (couramment désignés sous l'acronyme NOx), du monoxyde de carbone (CO), du carburant imbrûlé, ou encore des particules de suie.

Une fois la combustion terminée, les gaz d'échappement quittent le moteur et sont canalisés vers une ligne d'échappement, les gaz subissant plusieurs traitements par catalyse et filtration.

L'élimination des NOx des gaz d'échappement peut être effectuée par différentes méthodes. L'une des méthodes consiste à renvoyer une partie des gaz d'échappement vers le moteur afin que ceux-ci soient brulés lors d'une seconde combustion, cette technique étant désignée par l'acronyme anglais EGR pour Exhaust Gas Recyclation. D'autres dispositifs piègent les NOx par adsorption, ces pièges étant connus sous l'acronyme anglais LNT pour Lean NOx Trap. D'autres systèmes mettent en oeuvre une réduction catalytique sélective (SCR) et injectent une solution réductrice des NOx, l'injection étant pilotée de manière dynamique.

L'utilisation d'un système de réduction catalytique sélective implique que le véhicule soit équipé de moyens lui permettant de déterminer la quantité de NOx produite lors de la combustion, et ceci de manière instantanée.

Le document US 2014/0260190 propose un procédé de traitement des gaz d'échappement issus d'un moteur à combustion interne, pour un véhicule automobile comprenant une ligne d'échappement munie d'un réducteur catalytique sélectif (SCR), ce procédé comprenant les étapes suivantes :
- détermination de la quantité de NOx présents dans les gaz d'échappement,
- détermination de la quantité de NOx à traiter en fonction d'une quantité limite prédéterminée de NOx à rejeter dans l'atmosphère,
- détermination d'un débit d'agent réducteur à injecter dans le SCR pour éliminer la quantité de NOx à traiter,
- injection du débit d'agent réducteur précédemment déterminé dans le SCR, à partir d'un réservoir,
- modification de paramètres de fonctionnement du moteur afin de faire varier la quantité de NOx produite par le moteur en tenant compte d'un compromis production NOx et consommation de carburant.

Ce procédé présente toutefois des lacunes, notamment en ce qui concerne la consommation de l'agent réducteur. En effet, il est nécessaire de préserver l'agent réducteur de façon à ce que le remplissage du réservoir ne soit pas une contrainte trop importante pour l'utilisateur du véhicule. Avantageusement, le réservoir en agent réducteur de NOx n'est rempli qu'à chaque révision du véhicule. Le procédé décrit ci-dessus ne permet pas de préserver au mieux l'agent réducteur en optimisant sa consommation.

Le document FR 2 961 558 A1 propose un autre procédé selon le préambule de la revendication 1.

Un premier objectif est de proposer un procédé permettant de traiter efficacement les gaz d'échappement rejetés par le moteur.

Un deuxième objectif est de préserver le plus possible l'agent réducteur afin que sa consommation respecte un cahier des charges prédéfini en terme de consommation.

A cet effet, il est proposé, en premier lieu, un procédé de traitement des gaz d'échappement issus d'un moteur à combustion interne dans un véhicule automobile comprenant une ligne d'échappement munie d'un réducteur catalytique sélectif, ci-après SCR, et d'un réservoir comprenant un agent réducteur d'oxydes d'azote (NOx), ce procédé comprenant les étapes suivantes :
- détermination de la quantité réelle de NOx présents dans les gaz d'échappement,
- détermination d'une quantité de NOx à traiter en fonction d'une quantité limite prédéterminée de NOx à rejeter dans l'atmosphère,
- détermination d'un débit d'agent réducteur à injecter dans le SCR pour éliminer la quantité de NOx à traiter,
- injection du débit d'agent réducteur précédemment déterminé dans le SCR, à partir du réservoir,
- modification de paramètres de fonctionnement du moteur afin de faire varier la quantité de NOx produite par le moteur,
la modification des paramètres de fonctionnement du moteur étant effectuée sur la base d'un nombre sans dimension calculé suivant les étapes suivantes :
- calcul du volume d'agent réducteur injecté dans le SCR entre deux remplissages consécutifs du réservoir,
- mesure de la distance parcourue par le véhicule entre deux remplissages consécutifs du réservoir,
- calcul d'un débit discrétisé en divisant le volume d'agent réducteur injecté par la distance parcourue,
- calcul du nombre sans dimension en divisant le débit discrétisé par une consommation limite d'agent réducteur prédéterminé, si le nombre sans dimension est supérieur à 1, la modification des paramètres du moteur est effectuée pour réduire la quantité de NOx produite par le moteur.

Ce procédé permet de traiter efficacement les gaz d'échappement rejetés par le moteur. Le procédé tient compte en outre de la consommation d'agent réducteur en fonction de la manière dont conduit l'utilisateur, ce qui influe sur la production de NOx et de ce fait sur le débit de l'agent réducteur injecté.

Diverses caractéristiques supplémentaires peuvent être prévues, seules ou en combinaison :
- le procédé comprend une étape d'actualisation du volume d'agent réducteur injecté dans le SCR, lorsque le véhicule automobile parcourt une distance prédéterminée, cette distance étant modifiable ;
- la distance prédéterminée est de mille kilomètres ;
- le procédé comprend une étape d'actualisation d'une distance parcourue, pour un volume prédéterminé d'urée injecté, ce volume prédéterminé d'urée étant modifiable ;
- l'agent réducteur est une solution d'urée ;
- lorsque le nombre sans dimension est supérieur à 1, un calculateur fait passer le moteur en mode basse émission NOx en modifiant la richesse du mélange ;
- lorsque le nombre sans dimension est supérieur à 1, le calculateur modifie le régime moteur de passage d'un rapport de vitesse à un autre lorsque le véhicule automobile est équipé d'une boîte de vitesses automatique ou pilotée ;
- lorsque le nombre sans dimension est supérieur à 1, le calculateur actionne un levier d'assistance, à savoir un moteur électrique, afin de réduire la demande en couple sur le moteur thermique, lorsque le véhicule automobile est du type hybride et comprend un moteur thermique et un moteur électrique.

Il est proposé, en deuxième lieu, un système de dépollution comprenant un réducteur catalytique sélectif SCR, monté sur une ligne d'échappement et un calculateur dans lequel est implémenté un programme informatique apte à opérer le procédé tel que précédemment décrit.

Il est proposé, en troisième lieu, un véhicule automobile comprenant un système de dépollution tel que celui-ci est précédemment décrit.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une représentation d'un véhicule automobile comprenant un système de traitement des gaz d'échappement issus d'un moteur à combustion interne,
- la figure 2 est une représentation schématique du système de traitement des gaz d'échappement du véhicule automobile de la figure 1,

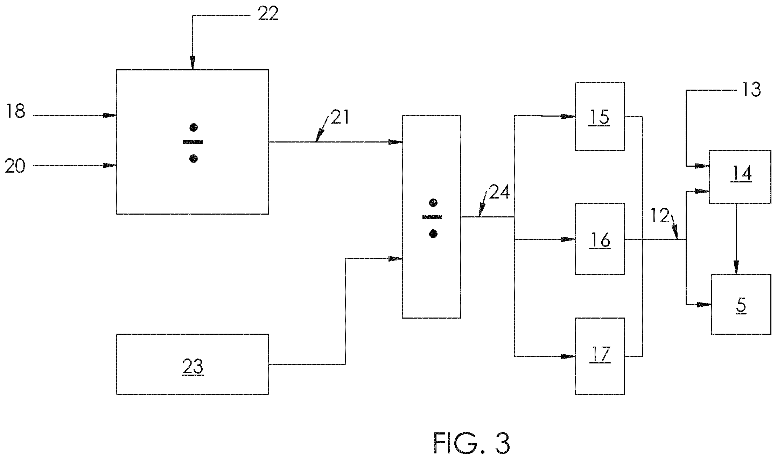

- la figure 3 est un diagramme illustrant les étapes d'un procédé de dépollution des gaz d'échappement.

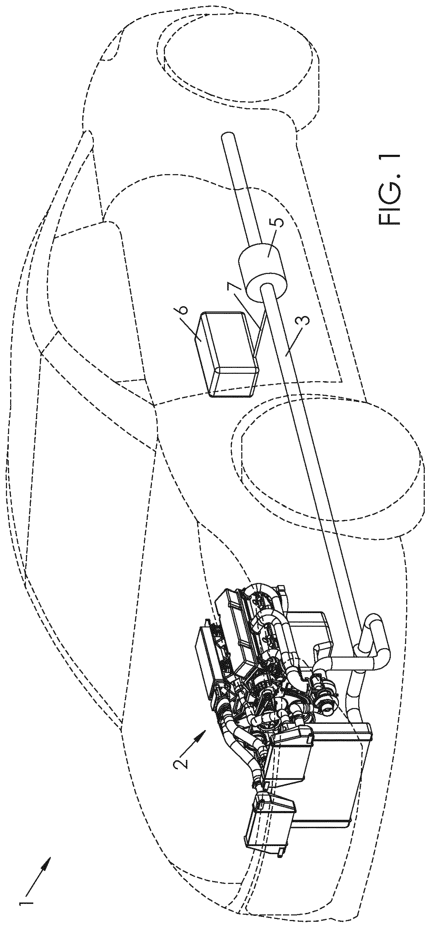

Il est représenté en figure 1, un véhicule **1** automobile comprenant un moteur **2** à combustion interne, une ligne **3** d'échappement et un système **4** de dépollution des gaz d'échappement issus du moteur **2.**

Les produits de la combustion contiennent, à la sortie du moteur **2,** des gaz contenant notamment des NOx. Les gaz d'échappement sont évacués du moteur **2** par la ligne **3** d'échappement sur laquelle est monté le système **4** de dépollution pour traiter les gaz d'échappement avant leur rejet dans l'atmosphère.

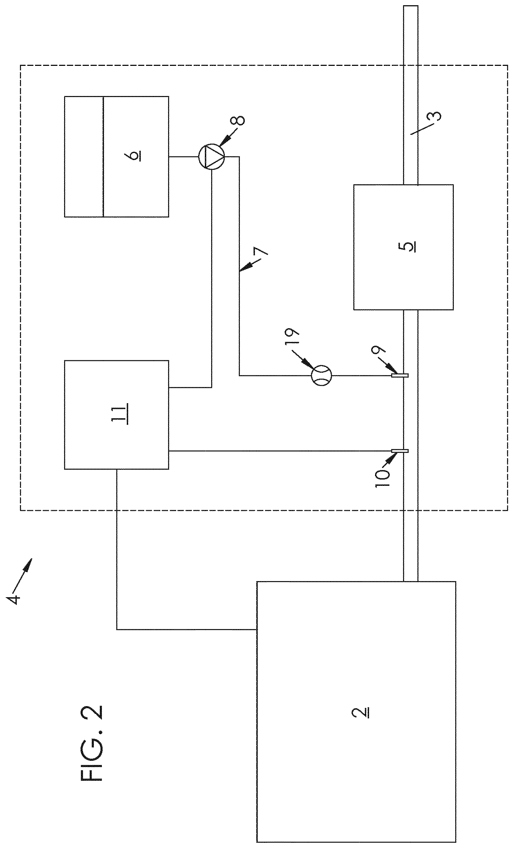

Le système **4** de dépollution, illustré de manière plus détaillée sur la figure 2, comprend :
- un réducteur catalytique sélectif ci-après dénommé SCR **5,**
- un réservoir **6** comprenant un agent réducteur, en l'espèce de l'urée,
- un circuit **7** d'injection d'urée,
- une pompe **8** d'injection,
- un injecteur **9,**
- une sonde **10** de mesure des NOx, et
- un calculateur **11.**

Un SCR **5** est un dispositif utilisé sur les véhicules diesel pour traiter les NOX présents dans les gaz d'échappement, grâce à une réduction des NOx par l'ammoniac, lequel est issu de l'urée portée à une température élevée, ceci en présence d'oxygène. A cette fin, un réservoir contient par exemple une solution aqueuse d'urée à 32.5% commercialisée sous la marque Adblue.

Le calculateur **11** pilote l'injection d'urée depuis le réservoir **6** grâce à la pompe **8** d'injection et à l'injecteur **9.** Le calculateur **11** est muni d'un support mémoire (non représenté) dans lequel est implémenté un programme informatique, et d'un processeur (non représenté).

La dépollution se fait via un procédé dont une première étape consiste à déterminer la quantité de NOx présente dans les gaz d'échappement, ci-après dénommée quantité **12** réelle. Cette quantité **12** réelle est déterminée par le calculateur **11** grâce à la sonde **10** de mesure. Il est toutefois possible d'opter pour une autre technique, à savoir la cartographie moteur chargée dans le calculateur **11.** A chaque point de fonctionnement du moteur **2,** il est alors possible pour le calculateur **11** de déterminer, en fonction de cette cartographie, la production instantanée de NOx.

Une deuxième étape consiste à déterminer une quantité de NOx à traiter en fonction d'une quantité **13** limite prédéterminée de NOx à rejeter dans l'atmosphère, ci-après dénommée quantité **13** limite. La quantité de NOx à traiter correspond à la différence entre la quantité **12** réelle et la quantité **13** limite. La quantité **13** limite est, en général, fournie par les normes en vigueur.

Une troisième étape consiste à déterminer un débit **14** d'urée à injecter dans le SCR **5** pour éliminer la quantité de NOx à traiter. Toutefois, une limite au débit **14** d'urée à injecter existe, et celle-ci est fixée par les constructeurs afin de brider le débit d'urée injectée. Il s'agit d'éviter que le SCR **5** ne soit trop consommateur et ne vide trop rapidement le réservoir **6** d'urée et que les éléments mécaniques tels que l'injecteur **9** et la pompe **8** d'injection ne s'usent prématurément. Cette limite implique, dans certaines situations de fonctionnement du moteur **2** où ce dernier produit beaucoup de NOx, que le véhicule **1** émette des NOx au delà de ce que les normes autorisent, et ceci malgré la dépollution effectuée. Il est donc important que cette situation soit évitée ; ce point sera détaillé ultérieurement.

Une quatrième étape consiste à injecter le débit **14** d'urée précédemment déterminé dans le SCR **5,** à partir du réservoir **6.**

Une cinquième étape consiste ensuite à modifier des paramètres de fonctionnement du moteur **2.** Ceci permet de faire varier à la fois la quantité de NOx produite et la consommation de carburant.

La gestion du moteur **2** s'articule entre deux modes. Un premier mode, dit « basse consommation de carburant » et un deuxième mode dit « faible émission NOx ».

Plus la production de NOx est importante, plus le débit **14** d'urée injectée sera élevé, au détriment des réserves d'urée. Il s'agit avantageusement, pour le conducteur, de préserver au mieux le réservoir **6** d'urée afin de ne le remplir qu'à chaque révision du véhicule **1,** soit tous les deux ans ou tous les vingt mille kilomètres environ.

Lorsque le moteur **2** est en mode basse consommation de carburant, le moteur **2** produit beaucoup de NOx et inversement lorsque le moteur **2** est en mode faible émission NOx, il consomme alors plus de carburant.

La gestion du moteur **2** tient compte à la fois de la consommation de carburant et de la consommation d'urée. Cette gestion consiste à modifier plusieurs paramètres différents, à savoir des réglages **15** de combustion, des lois **16** de passages de rapport de vitesses (pour les boîtes automatiques ou pilotées), des leviers **17** d'assistance, et éventuellement un profil de conduite du conducteur.

En ce qui concerne les réglages **15** de combustion, la gestion moteur permet de jouer sur l'enrichissement du mélange carburant/air pour modifier les caractéristiques de la combustion.

Les lois **16** de passages de rapport de vitesses permettent, lorsque la boîte de vitesses est automatique ou pilotée, de gérer les rapports de passage. Afin de réduire la consommation, les passages de vitesses se font à des régimes moteur inférieurs, ceci correspond en général au mode économique sur ces véhicules. En mode sport, le passage d'un rapport de vitesses à l'autre, se fait à des régimes moteur supérieurs.

Les leviers **17** d'assistance permettent, dans les véhicules hybrides, d'apporter un appoint de puissance. Un moteur électrique permet de réduire la consommation de carburant et/ou production de NOx. Une autre solution consiste à réduire la charge sur le moteur en débrayant les dispositifs demandeurs de couple, comme par exemple un alternateur (non représenté) du véhicule ou une climatisation (non représentée).

Comme il l'a été précédemment mentionné, une limite est imposée par le constructeur au calculateur **11** pour que l'injection d'urée soit bridée lorsque le débit nécessaire pour traiter les NOx est trop élevé. Ce bridage se fait au détriment de la pollution. Dans un tel cas de figure, le véhicule rejette des quantités de NOx supérieures à ce que la norme en vigueur impose.

Afin de remédier à ce problème, le procédé comprend la prise en compte sur le long terme de la consommation d'urée. Ce procédé s'inscrit tout particulièrement dans la situation où la production de NOx à la source, c'est à dire au moteur **2,** est importante.

Entre chaque remplissage du réservoir **6** d'urée, le calculateur **11** détermine le volume **18** d'urée injecté au moyen d'un débitmètre **19** situé sur le circuit **7** d'injection et une distance **20** parcourue par le véhicule. Le volume **18** d'urée injecté est divisé par la distance **20** parcourue ce qui donne un volume **21** d'urée discrétisé, c'est à dire échantillonné par kilomètre.

En parallèle, une actualisation **22** du volume **18** d'urée injecté sur le long terme est effectuée, par exemple tous les mille kilomètres. Cette distance peut tout à fait être différente sans que cela n'affecte de quelque manière que ce soit le procédé décrit. Ceci permet d'actualiser le volume **21** d'urée discrétisé à des fins de précision. Il peut également être prévu une actualisation sur la base d'une consommation d'urée prédéterminée. Autrement dit tous les cinquante litres d'urée consommée par exemple, la distance parcourue est mesurée. Cette valeur peut tout à fait être différente, sans que cela n'affecte de quelque manière que ce soit le procédé décrit. Il est alors également calculé un volume **21** d'urée discrétisé.

Le volume **21** d'urée discrétisé est ensuite divisé par une consommation d'urée limite prédéterminée par kilomètre, ci-après dénommée consommation **23** limite. Cette consommation **23** limite correspond à la consommation d'urée par kilomètre parcouru afin de respecter le cahier des charges du constructeur. En d'autres termes, la consommation **23** limite permet de faire en sorte que le remplissage du réservoir **6** d'urée se fasse bien tous les vingt mille kilomètres, ou, si cette distance n'est pas atteinte, à la prochaine révision du véhicule, soit chaque deux ans environ.

De cette manière, le calculateur **11,** compare le volume **18** d'urée injecté du véhicule avec la consommation **23** limite sur de longues distances. Ceci donne au calculateur **11** la possibilité d'influer sur divers paramètres précédemment énoncés, pour permettre de respecter le cahier des charges du constructeur.

La division du volume **21** d'urée discrétisé par la consommation **23** limite donne un nombre **24** sans dimension, c'est à dire sans unité. Ce nombre **24** sans dimension est alors interprété par le calculateur **11.**

Lorsque le nombre sans dimension est supérieur à 1, la consommation d'urée par kilomètre est supérieure à la consommation **23** limite. Le calculateur **11** influe alors sur les paramètres du moteur, en réduisant la production de NOx par le moteur, et le moteur passe en mode faible émission NOx. Dans les véhicules dont la boîte de vitesses est automatique ou pilotée, le régime moteur de changement de rapport est abaissé. Sur les véhicules hybrides, le moteur électrique est démarré pour assister le moteur thermique. Dans les véhicules non-hybrides, l'alternateur est débrayé du moteur pour soulager ce dernier. Il est également possible d'influencer le profil de conduite de l'utilisateur.

Lorsque le nombre sans dimension est inférieur à ou égal à 1, la consommation d'urée par kilomètre est inférieure ou égale à la consommation **23** limite.

Ce procédé de gestion de la consommation d'urée incluant le calcul de la consommation d'urée sur le long terme permet d'optimiser les performances du véhicule. Il apparaît que cette méthode est d'autant plus précise que l'étude du profil de consommation d'urée se fait sur de longues distances. Il y a donc un effet d'histoire. La gestion des paramètres du moteur selon cette méthode est alors plus précise qu'un simple procédé de gestion moteur.

## Revendications

1. Procédé de traitement des gaz d'échappement issus d'un moteur (**2**) à combustion interne dans un véhicule (**1**) automobile comprenant une ligne (**3**) d'échappement muni d'un réducteur catalytique sélectif ci-après SCR (**5**) et d'un réservoir (**6**) comprenant un agent réducteur d'oxydes d'azote (NOx), ce procédé comprenant les étapes suivantes :
- détermination de la quantité (**12**) réelle de NOx présents dans les gaz d'échappement,
- détermination d'une quantité de NOx à traiter en fonction d'une quantité (**13**) limite prédéterminée de NOx à rejeter dans l'atmosphère,
- détermination d'un débit (**14**) d'agent réducteur à injecter dans le SCR (**5**) pour éliminer la quantité de NOx à traiter,
- injection du débit (**14**) d'agent réducteur précédemment déterminé dans le SCR (**5**), à partir du réservoir (**6**),
- modification de paramètres de fonctionnement du moteur (**2**) afin de faire varier la quantité de NOx produite par le moteur, **caractérisé en ce que** la modification des paramètres de fonctionnement du moteur (**2**) est effectuée sur la base d'un nombre (**24**) sans dimension calculé suivant les étapes suivantes :
- calcul du volume (**18**) d'agent réducteur injecté dans le SCR entre deux remplissages consécutifs du réservoir (**6**),
- mesure de la distance (**20**) parcourue par le véhicule (**1**) entre deux remplissages consécutifs du réservoir (**6**),
- calcul d'un débit (**21**) discrétisé en divisant le volume (**18**) d'agent réducteur injecté par la distance (**20**) parcourue,
- calcul du nombre (**24**) sans dimension en divisant le débit (**21**) discrétisé par une consommation (**23**) limite d'agent réducteur prédéterminé,
si le nombre (**24**) sans dimension est supérieur à 1, la modification des paramètres du moteur est effectuée pour réduire la quantité de NOx produite par le moteur (**2**).

2. Procédé selon la revendication 1, **caractérisé en ce que** le procédé comprend une étape d'actualisation (**22**) du volume (**18**) d'agent réducteur injecté dans le SCR (**5**), lorsque le véhicule (**1**) automobile parcourt une distance prédéterminée, cette distance étant modifiable.

3. Procédé selon la revendication 2, **caractérisé en ce que** la distance prédéterminée est de mille kilomètres.

4. Procédé selon la revendication 1, **caractérisé en ce que** le procédé comprend une étape d'actualisation (**22**) d'une distance parcourue, pour un volume prédéterminé d'urée injecté, ce volume prédéterminé d'urée étant modifiable.

5. Procédé selon l'une quelconque des revendications précédentes, **caractérisé en ce que** l'agent réducteur est une solution d'urée.

6. Procédé selon l'une quelconque des revendications précédentes, **caractérisé en ce que** lorsque le nombre (**24**) sans dimension est supérieur à 1, un calculateur (**11**) fait passer le moteur en mode basse émission NOx en modifiant la richesse du mélange.

7. Procédé selon la revendication 6, **caractérisé en ce que** lorsque le nombre (**24**) sans dimension est supérieur à 1, le calculateur (11) modifie le régime moteur de passage d'un rapport de vitesse à un autre, lorsque le véhicule automobile est équipé d'une boîte de vitesses automatique ou pilotée.

8. Procédé selon l'une des revendications 6 ou 7, **caractérisé en ce que** lorsque le nombre (**24**) sans dimension est supérieur à 1, le calculateur (**11**) actionne un levier d'assistance, à savoir un moteur électrique, afin de réduire la demande en couple sur le moteur thermique, lorsque le véhicule automobile est du type hybride et comprend un moteur thermique et un moteur électrique.

9. Système (**4**) de dépollution comprenant un réducteur catalytique sélectif ci-après SCR (**5**), monté sur une ligne (**3**) d'échappement et un calculateur (**11**) dans lequel est implémenté un programme informatique apte à opérer le procédé selon l'une quelconque des revendications précédentes.

10. Véhicule (**1**) automobile comprenant un système (**4**) de dépollution selon la revendication 9.

## Patentansprüche

1. Behandlungsverfahren der Abgase, die aus einem Verbrennungsmotor (**2**) in einem Kraftfahrzeug (**1**) stammen, umfassend eine Abgasleitung (**3**), die mit einem selektiven katalytischen Reduktor, nachstehend SCR (**5**), und einem Behälter (**6**) ausgestattet ist, der ein Stickoxid- (NOx-) Reduktionsmittel umfasst, wobei dieses Verfahren die folgenden Schritte umfasst:
- Bestimmung der reellen NOx-Menge (**12**), die in den Abgasen vorhanden ist,
- Bestimmung einer zu behandelnden NOx-Menge in Abhängigkeit von einer vorbestimmten NOx-Grenzmenge (**13**), die in die Atmosphäre auszustoßen ist,
- Bestimmung eines Reduktionsmitteldurchsatzes (**14**), der in den SCR (**5**) einzuspritzen ist, um die zu behandelnde NOx-Menge zu beseitigen,
- Einspritzung des vorher bestimmten Reduktionsmitteldurchsatzes (**14**) aus dem Behälter (**6**) in den SCR (**5**),
- Veränderung von Betriebsparametern des Motors (**2**), um die von dem Motor produzierte NOx-Menge zu variieren, **dadurch gekennzeichnet, dass** die Veränderung der Betriebsparameter des Motors (**2**) auf der Basis einer dimensionslosen Zahl (**24**) erfolgt, die nach den folgenden Schritten berechnet wird:
- Berechnung des zwischen zwei aufeinanderfolgenden Befüllungen des Behälters (**6**) in den SCR eingespritzten Reduktionsmittelvolumens (**18**),
- Messung der zwischen zwei aufeinanderfolgenden Befüllungen des Behälters (**6**) von dem Fahrzeug (**1**) gefahrenen Strecke (**20**),
- Berechnung eines diskretisierten Durchsatzes (**21**) durch Dividieren des eingespritzten Reduktionsmittelvolumens (**18**) durch die gefahrene Strecke (**20**),
- Berechnung der dimensionslosen Zahl (**24**) durch Dividieren des diskretisierten Durchsatzes (**21**) durch einen vorbestimmten begrenzten Reduktionsmittel-Grenzverbrauch (**23**),
wenn die dimensionslose Zahl (**24**) größer als 1 ist, die Veränderung der Motorparameter erfolgt, um die von dem Motor (**2**) produzierte NOx-Menge zu verringern.

2. Verfahren nach Anspruch 1, **dadurch gekennzeichnet, dass** das Verfahren einen Schritt der Aktualisierung (**22**) des in den SCR (**5**) eingespritzten Reduktionsmittelvolumens (**18**) umfasst, wenn das Kraftfahrzeug (**1**) eine vorbestimmte Strecke fährt, wobei diese Strecke veränderbar ist.

3. Verfahren nach Anspruch 2, **dadurch gekennzeichnet, dass** die vorbestimmte Strecke tausend Kilometer beträgt.

4. Verfahren nach Anspruch 1, **dadurch gekennzeichnet, dass** das Verfahren einen Schritt der Aktualisierung (**22**) einer gefahrenen Strecke für ein vorbestimmtes eingespritztes Harnstoffvolumen umfasst, wobei dieses vorbestimmte Harnstoffvolumen veränderbar ist.

5. Verfahren nach einem der vorherigen Ansprüche, **dadurch gekennzeichnet, dass** das Reduktionsmittel eine Harnstofflösung ist.

6. Verfahren nach einem der vorherigen Ansprüche, **dadurch gekennzeichnet, dass** wenn die dimensionslose Zahl (**24**) größer als 1 ist, ein Rechner (**11**) den Motor in NOx-Niedrigemissionsmodus schaltet, indem er das Verhältnis des Gemisches verändert.

7. Verfahren nach Anspruch 6, **dadurch gekennzeichnet, dass** wenn die dimensionslose Zahl (**24**) größer als 1 ist, der Rechner (**11**) die Motordrehzahl zum Schalten von einem Gang in einen anderen verändert, wenn das Kraftfahrzeug mit einem Automatik- oder gesteuerten Getriebe ausgerüstet ist.

8. Verfahren nach einem der Ansprüche 6 oder 7, **dadurch gekennzeichnet, dass** wenn die dimensionslose Zahl (**24**) größer als 1 ist, der Rechner (**11**) einen Unterstützungshebel, nämlich einen Elektromotor betätigt, um die Drehmomentforderung an den Verbrennungsmotor zu verringern, wenn das Kraftfahrzeug vom Hybridtyp ist und einen Verbrennungsmotor und einen Elektromotor umfasst.

9. Reinigungssystem (**4**), das einen selektiven katalytischen Reduktor, nachstehend SCR (**5**), umfasst, der in einer Abgasleitung (**3**) eingebaut ist, und einen Rechner (**11**), in dem ein Informatikprogramm implementiert ist, das in der Lage ist, das Verfahren nach einem der vorherigen Ansprüche auszuführen.

10. Kraftfahrzeug (**1**), das ein Reinigungssystem (**4**) nach Anspruch 9 umfasst.

## Claims

1. Method for treating the exhaust gases issuing from an internal combustion engine (**2**) in a motor vehicle (**1**) comprising an exhaust line (**3**) provided with a selective catalytic reducer, hereinafter SCR (**5**), and a reservoir (**6**) comprising an agent for reducing nitrogen oxides (NOx), this method comprising the following steps:
- determining the actual quantity (**12**) of NOx, present in the exhaust gases,
- determining a quantity of NOx to be treated according to a predetermined limit quantity (**13**) of NOx to be discharged into the atmosphere,
- determining a flow (**14**) of reducing agent to be injected into the SCR (**5**) in order to eliminate the quantity of NOx to be treated,
- injecting the flow (**14**) of reducing agent previously determined into the SCR (**5**), from the reservoir (**6**),
- modifying operating parameters of the engine (**2**) in order to vary the quantity of NOx produced by the engine, **characterised in that** the modification to the operating parameters of the engine (**2**) is done on the basis of a dimensionless number (**24**) calculated in accordance with the following steps:
- calculation of the volume (**18**) of reducing agent injected into the SCR between two consecutive fillings of the reservoir (**6**),
- measurement of the distance (**20**) travelled by the vehicle (**1**) between two consecutive fillings of the reservoir (**6**),
- calculation of a discretised flow (**21**) by dividing the volume (**18**) of reducing agent injected by the distance (**20**) travelled,
- calculation of the dimensionless number (**24**) by dividing the discretised flow (**21**) by a limit consumption (**23**) of predetermined reducing agent,
if the dimensionless number (**24**) is greater than 1, the parameters of the engine are modified in order to reduce the quantity of NOx produced by the engine (**2**).

2. Method according to claim 1, **characterised in that** the method comprises a step (**22**) of updating the volume (**18**) of reducing agent injected into the SCR (**5**), when the motor vehicle (**1**) travels a predetermined distance, this distance being modifiable.

3. Method according to claim 2, **characterised in that** the predetermined distance is one thousand kilometres.

4. Method according to claim 1, **characterised in that** the method comprises a step (**22**) of updating a distance travelled, for a predetermined volume of urea injected, this predetermined volume of urea being modifiable.

5. Method according to any of the preceding claims, **characterised in that** the reducing agent is a urea solution.

6. Method according to any of the preceding claims, **characterised in that**, when the dimensionless number (**24**) is greater than 1, a computer (**11**) switches the engine into low NOx emission mode by modifying the richness of the mixture.

7. Method according to claim 6, **characterised in that**, when the dimensionless number (**24**) is greater than 1, the computer (**11**) modifies the engine speed for passing from one gear ratio to another, when the motor vehicle is equipped with an automatic or controlled gearbox.

8. Method according to either claim 6 or claim 7, **characterised in that**, when the dimensionless number (**24**) is greater than 1, the computer (**11**) actuates an assistance lever, namely an electric motor, in order to reduce the torque demand on the thermal engine, when the motor vehicle is of the hybrid type and comprises a thermal engine and an electric motor.

9. Depollution system (**4**), comprising a selective catalytic reducer, hereinafter SCR (**5**), mounted on an exhaust line (**3**), and a computer (**11**) in which a computer program able to operate the method according to any of the preceding claims is implemented.

10. Motor vehicle (**1**) comprising a depollution system (**4**) according to claim 9.
